# NOUVEAU FASCICULE DE BREVET EUROPEEN

(11) **EP 1 450 295 B2**
(45) Date de publication et mention de la décision concernant l'opposition: **23.02.2011**
(45) Mention de la délivrance du brevet: 07.05.2008
(21) Numéro de dépôt: 04300070.2
(22) Date de dépôt: 09.02.2004
(51) Int. Cl.: G06K 9/38, G06K 9/68

(54) **Procédé pour la reconnaissance optique d'envois postaux utilisant plusieurs binarisations**
Verfahren zur optischen Erkennung von Postsendungen mittels mehrfacher Binarisierung
Optical mail recognition method using several binarisations

(30) Priorité: 19.02.2003 FR 0301997
(43) Date de publication de la demande: 25.08.2004
(73) Titulaire: Solystic, 94257 Gentilly Cedex (FR)
(72) Inventeur: Benyoub, Belkacem, 91120 Palaiseau (FR)
(74) Mandataire: Prugneau, Philippe

(56) Documents cités:
- EP-A- 0 964 353
- DE-C1- 19 531 392
- DE-C2- 19 508 203
- FR-A- 2 795 205
- US-A- 4 747 149
- US-A- 5 081 690
- US-A- 5 418 864
- US-A- 5 768 441
- US-A1- 2002 043 748
- US-A1- 2002 054 693
- US-B1- 6 282 314

## Description

L'invention concerne un procédé pour le traitement d'envois postaux dans un système automatique de lecture d'adresse, dans lequel on forme une image multi-niveaux de gris de la surface de chaque envoi comportant l'information d'adresse, on transforme l'image multi-niveaux de gris en une première image binaire et on envoie l'image binaire à une unité OCR en vue d'une première évaluation automatique de l'information adresse.

Ce procédé s'applique plus particulièrement à une installation de tri postal automatisée dans laquelle l'évaluation automatique des informations d'adresse sert à l'acheminement et à la distribution des envois postaux.

Dans les procédés connus de traitement d'envois postaux du genre indiqué plus haut, le traitement de binarisation d'une image multi-niveaux de gris met en oeuvre des algorithmes de plus en plus sophistiqués pour tenir compte de la diversité des images à traiter. Plus particulièrement des algorithmes ont été développés pour tenter de binariser des images multi-niveaux de gris dans lesquelles l'information d'adresse est peu lisible du fait d'un faible contraste entre le tracé de l'information d'adresse et le fond de l'image, dans lesquelles les caractères de l'information d'adresse sont plus ou moins espacés les uns des autres selon qu'il s'agit de caractères manuscrits ou au contraire de caractères résultant d'une impression par machine qui peut être une imprimante à aiguilles, une imprimante laser, etc...

Malgré les performances accrues de ces algorithmes de binarisation, on constate toujours en pratique dans des lots d'envois postaux dans une installation de tri postal automatisée, qu'une partie des envois traités est rejetée faute d'une reconnaissance non équivoque de l'information d'adresse due à la binarisation ou est en erreur de lecture de l'information d'adresse due à la binarisation.

Du document de brevet US-6282314, on connaît un procédé pour analyser des images pouvant contenir des caractères et des tableaux dans lequel on binarise l'image en vue d'isoler les portions de l'image contenant des caractères lisibles par OCR. Du document de brevet US-4747149, on connaît encore un procédé pour analyser des images dans lequel on effectue en parallèle plusieurs binarisations et on applique un traitement OCR sur la meilleure image binaire.

Du document de brevet US-5081690, on connaît une méthode OCR dans laquelle on effectue successivement une binarisation sur une image MNG, puis une évaluation OCR sur l'image binaire, puis une binarisation sur la même image MNG et enfin une seconde évaluation OCR. la seconde binarisation et la seconde évaluation OCR sont répétées tant que l'on n'obtient pas un taux de fiabilité suffisant. Cette méthode itérative n'est pas adaptée à des conditions temps réel.

Le but de l'invention est de proposer une amélioration à un procédé de traitement d'envois tel qu'indiqué plus haut en vue d'obtenir une augmentation du taux de lecture et une réduction du taux d'erreur.

A cet effet, l'invention a pour objet un procédé pour le traitement d'envois postaux dans un système automatique de lecture d'adresse tel que défini par la revendication 1.

Dans le procédé selon l'invention, la première transformation de l'image multi-niveaux de gris met en oeuvre un algorithme de binarisation dit polyvalent dans le sens où cet algorithme n'est pas spécifiquement adapté à une catégorie particulière de tracés d'information d'adresse. Par catégories de tracé, il faut comprendre des catégories dans lesquelles les tracés sont classés selon qu'il s'agit d'un tracé manuscrit ou d'un tracé résultant d'une impression par machine ; d'un tracé inscrit avec un faible contraste dans l'image multi-niveaux de gris ou d'un tracé inscrit avec un fort niveau de contraste dans l'image multi-niveaux de gris ; d'un tracé avec des caractères imprimés par une machine d'impression à aiguilles ou d'un tracé avec des caractères imprimés par une machine d'impression à laser ; d'un tracé avec des caractères disjoints ou d'un tracé avec des caractères chaînés, etc.... L'homme du métier connaît des algorithmes de binarisation dits polyvalents qui fonctionnent de façon statistiquement satisfaisante sur un spectre étendu de catégories de tracés d'information d'adresse.

La seconde transformation de l'image multi-niveaux de gris met par contre en oeuvre un algorithme de binarisation spécialisé dans le sens où cet algorithme est adapté spécifiquement à une catégorie de tracés d'information d'adresse. A titre d'exemples non limitatifs, l'Homme du métier sait qu'un algorithme de binarisation basé sur une convolution de type Laplacien convient bien pour des images à faible contraste ; un algorithme de binarisation basé sur un seuillage statique convient bien pour des images à fort contraste ; un algorithme de binarisation basé sur un filtrage passe bas qui moyenne les valeurs des pixels sur un grand voisinage convient bien pour un tracé résultant d'une impression par une machine d'impression à aiguilles ; etc...

Un exemple de mise en oeuvre du procédé selon l'invention est décrit ci-après et illustré par les dessins.

La figure 1 représente sous la forme d'un schéma bloc le procédé selon l'invention.

La figure 2 illustre de façon schématique la combinaison des résultats des deux évaluations automatiques.

L'idée à la base de l'invention est donc d'appliquer sur une image multi-niveaux de gris comportant une information d'adresse, après une première évaluation automatique de l'information d'adresse, un second traitement de binarisation plus adapté que le premier traitement de binarisation à certaines spécificités du tracé de l'information d'adresse.

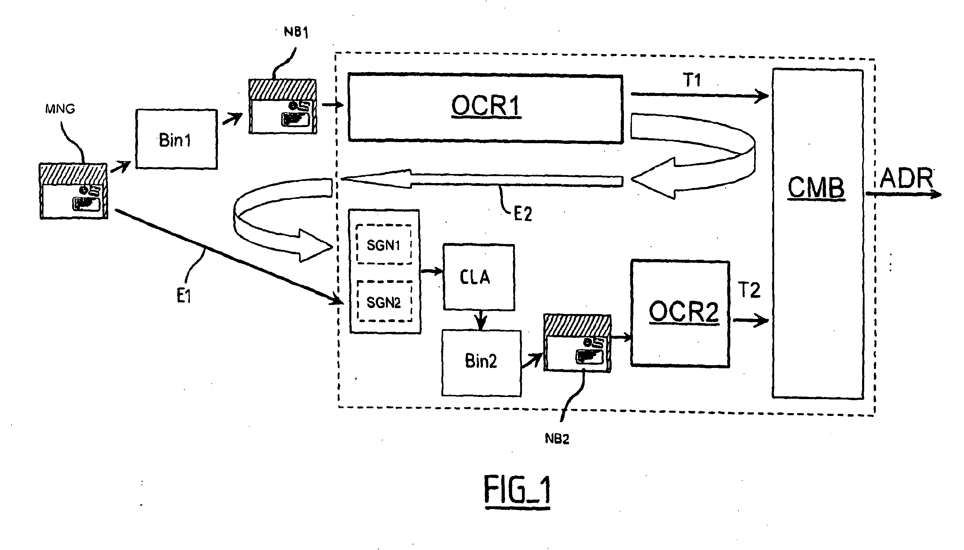

Sur la figure 1, une image multi-niveaux de gris MNG de la surface d'un envoi postal comportant une information d'adresse est donc d'abord transformée par un premier traitement de binarisation polyvalent Bin1 en une première image binaire NB1.

La première image binaire NB1 est envoyée à une unité OCR en vue d'une première évaluation automatique OCR1 de l'information adresse.

Des données constituant une signature SGN1, SGN2 sont extraites de l'image multi-niveaux de gris MNG et de l'image binaire NB1 et des résultats de l'évaluation automatique OCR1. L'extraction de ces données est symbolisée par les flèches E1 et E2.

La partie de signature SGN1 contient à titre d'exemple :
- des données extraites de l'évaluation automatique OCR1 et indicatives du type de tracé (manuscrit / résultant d'une impression par machine) de l'information d'adresse ;
- les coordonnées spatiales du bloc d'adresse dans l'image binaire rendues par le traitement OCR1 ;
- des données statistiques extraites de l'image binaire Bin1 et de l'évaluation automatique OCR1 et indicatives de la qualité de la typographie du tracé de l'information d'adresse : moyenne des densités des composantes connexes (pixels chaînés dans l'image binaire) ; nombre de composantes connexes par caractère de l'information d'adresse ; nombre de caractères par composante connexe, nombre de parasites par caractère ; moyenne des scores de reconnaissance des meilleurs candidats sur tout le bloc d'adresse.

La partie de signature SGN2 contient à titre d'exemple des données statistiques extraites de l'image multi-niveaux de gris et indicatives du niveau de contraste du tracé de l'information d'adresse dans l'image multi-niveaux de gris : niveau de gris moyen des caractères dans l'image multi-niveaux de gris ; écart-type de l'histogramme des niveaux gris des caractères ; niveau de gris moyen du fond de l'image multi-niveaux de gris ; écart-type de l'histogramme du fond de l'image multi-niveaux de gris.

Ces données extraites constituant la signature SGN1, SGN2 servent à catégoriser dans chaque image multi-niveaux de gris MNG le tracé de l'information d'adresse. Les données de catégorisation peuvent être appliquées en entrée d'un classifieur CLA apte à identifier la catégorie du tracé de l'information d'adresse et donc le traitement de binarisation spécialisé, parmi plusieurs traitements de binarisation spécialisés, le plus adapté à la catégorie du tracé. On soumet ensuite l'image multi-niveaux de gris MNG au traitement de binarisation spécialisé indiqué par Bin2 identifié par le classifieur CLA.

Des algorithmes de binarisation spécialisés tels que Bin2 pour la binarisation d'images ayant un fond bruité, d'images dans lesquelles les informations d'adresse sont manuscrites, d'images dans lesquelles les informations d'adresse sont dactylographiées, etc... sont connus de l'Homme du métier. Ces algorithmes utilisent selon le cas entre autres les contrastes adaptatifs, des opérateurs différentiels, des opérateurs passe bas ou encore des seuillages dynamiques.

La seconde image binaire NB2 peut ensuite être envoyée à une unité OCR pour une seconde évaluation automatique OCR2 de l'information d'adresse.

Le classifieur CLA peut être par exemple un réseau de neurones à apprentissage supervisé ou un système expert à base de connaissance fonctionnant en logique floue.

Avec le procédé selon l'invention, on a constaté qu'en combinant les résultats T1 et T2 des deux évaluations automatiques OCR1 et OCR2, on obtenait un taux de lecture en sortie de cette combinaison supérieur au taux de lecture en sortie de la première évaluation automatique OCR1 et également supérieur au taux de lecture en sortie de la seconde évaluation automatique OCR2.

On a aussi constaté qu'en combinant les résultats T1 et T2 respectivement en sortie de la première évaluation automatique OCR1 et de la seconde évaluation automatique OCR2, on pouvait réduire le taux d'erreur global en comparaison du taux d'erreur particulier obtenu en sortie de la première évaluation automatique et du taux d'erreur obtenu en sortie de la seconde évaluation automatique.

Sur la figure 1, le bloc référencé par CMB représente le processus de combinaison des résultats T1 et T2. Ce processus de combinaison peut consister dans l'utilisation des vecteurs résultats produits en sortie de l'unité OCR effectuant la première et la seconde évaluation automatique ainsi que des taux de confiance associés à ces vecteurs résultats. Le processus de combinaison peut également utiliser un système expert permettant de corréler les hypothèses d'adresses en utilisant les liens obtenus au niveau sémantique à travers la base de données d'adresses. L'intérêt de ce processus de combinaison des résultats T1 et T2 est qu'il permet, en particulier d'améliorer le taux de lecture sur les images binaires NB2 en cas de rejet de l'information d'adresse dans le traitement OCR1 ; d'améliorer le taux de lecture global par récupération dans le traitement OCR2 des résultats de classification du traitement OCR1.

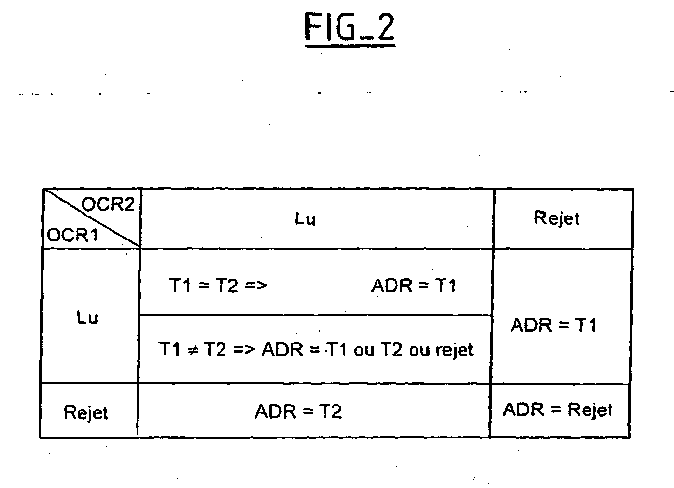

Plus particulièrement en se référant à la figure 2, les traitements OCR1 et OCR2 peuvent avoir extrait une ou deux informations contextuelles d'adresse, voire aucune en cas d'échec sur les deux images binaires NB1, NB2. Selon l'invention, la combinaison CMB des informations contextuelles d'adresse T1 et T2 consiste à former une information d'adresse ADR dans le cas où deux informations contextuelles T1 et T2 sont lues et sont corrélées, ce qui est symbolisé par T1 = T2 => ADR = T1. Si une seule information contextuelle T1 ou T2 est lue, elle est retenue comme étant l'information d'adresse recherchée, ce qui est symbolisé par les blocs ADR = T1 ou ADR = T2. Si deux informations contextuelles contradictoires T1 et T2 sont lues, un arbitrage prenant en compte les taux de confiance respectifs des informations contextuelles T1 et T2 est nécessaires pour déterminer quelle adresse ADR doit être retenue, ce qui est symbolisé par T1 T2 => T1 ou T2 ou « rejet » sur la figure 2. Enfin, aucune information d'adresse n'est formée si aucune information contextuelle n'est extraite des images binaires NB1 et NB2, ce qui correspond au bloc ADR = rejet.

## Revendications

1. Un procédé pour le traitement d'envois postaux dans un système automatique de lecture d'adresse, dans lequel on forme une image multi-niveaux de gris (MNG) de la surface d'un envoi courant comportant une information d'adresse (ADR), on transforme l'image multi-niveaux de gris en une première image binaire (NB1) et on envoie l'image binaire à une unité OCR en vue d'une première évaluation automatique de l'information d'adresse (OCR1), **caractérisé en ce que** ladite première image binaire est transformée à l'aide d'un algorithme de binarisation polyvalent, **en ce que** on extrait de l'image multi-niveaux de gris et de l'image binaire et du résultat de l'évaluation automatique, des données constituant une signature (SGN1, SGN2) pour l'envoi courant représentative d'une catégorie de tracés d'information d'adresse dans un classifieur (CLA) agencé pour identifier parmi plusieurs algorithmes de binarisation différents possibles chacun adapté spécifiquement à une catégorie de tracés d'information d'adresse, celui qui est le plus adapté à l'envoi courant, et **en ce que** on transforme de nouveau l'image multi-niveaux de gris en une seconde image binaire (NB2) en utilisant ledit algorithme de binarisation identifié par le classiffeur en tenant compte de la catégorie représentée par ladite signature, **en ce que** on envoie la seconde image binaire dans une unité OCR en vue d'une seconde évaluation automatique (OCR2) et **en ce que** les résultats de la première évaluation automatique (OCR1) et de la seconde évaluation automatique (OCR2) sont combinés en vue d'obtenir l'information d'adresse (ADR) pour l'envoi courant.

2. Le procédé selon la revendication 1, dans lequel les données constituant la signature (SGN1, SGN2) comprennent des données statistiques sur l'image multi-niveaux de gris, des données statistiques sur la première image binaire, des données statistiques sur la reconnaissance de mots et de caractères fournies par la première évaluation automatique (OCR1).

3. Le procédé selon la revendication 1 ou 2, dans lequel les données constituant la signature (SGN1, SGN2) comprennent des premières données statistiques indicatives du niveau de contraste du tracé de l'information d'adresse dans l'image multi-niveaux de gris, des secondes données statistiques indicatives de la qualité de la typographie du tracé de l'information d'adresse dans la première image binaire, des troisièmes données indicatives du type de tracé de l'information d'adresse (tracé manuscrit ou tracé résultant d'une impression par machine) et des quatrièmes données statistiques sur la qualité de reconnaissances mots et caractères fournies par la première évaluation automatique (OCR1).

4. Le procédé selon l'une des revendications précédentes, dans lequel le classifieur (CLA) est un réseau de neurones à apprentissage supervisé.

## Claims

1. A method of processing postal articles in an automatic address-reading system in which method a multi-level gray scale image (MNG) is formed of the surface of a current article including address information (ADR), the multi-level gray scale image is transformed into a first binary image (NB1) and the binary image is sent to an OCR unit for a first automatic evaluation of the address information (OCR1), **characterised in that** said first binary image is transformed with the help of a general-purpose binarization algorithm, data constituting a signature (SGN1, SGN2) for the current article representative of a category of address information marks are extracted from the multi-level gray scale image and the binary image and the result of automatic data evaluation in a classifier (CLA) suitable for identifying from a plurality of different possible binarization treatments each specifically adapted to a category of address information marks, the one that is best suited to the current article, the multi-level gray scale image is transformed again into a second binary image (NB2) using said binarization treatment identified by the classifier taking account of the category represented by said signature, and the second binary image is sent to an OCR unit for a second automatic evaluation (OCR2), the results of the first automatic evaluation (OCR1) and of the second automatic evaluation (OCR2) are combined in order to obtain the address information (ADR) for the current article.

2. The method according to claim 1, in which the data constituting the signature (SGN1, SGN2) comprise statistical data concerning the multi-level gray scale image, statistical data concerning the first binary image, and statistical data concerning the recognition of words and characters delivered by the first automatic evaluation (OCR1).

3. The method according to claim 1 or 2, in which the data constituting the signature (SGN1, SGN2) comprise first statistical data indicative of the level of contrast in the address information marks of the multi-level gray scale image, second statistical data indicative of the typographical quality of the address information marks in the first binary image, third data indicative of the type of address information marks (handwritten image or machine-printed marks), and fourth statistical data about the quality of the recognition of words and characters delivered by the first automatic evaluation (OCR1).

4. The method according to any of the preceding claims, in which the classifier (CLA) is a neural network with supervised training.

## Patentansprüche

1. Verfahren zur Behandlung von Postsendungen in einem automatischen Adressenlesesystem, in dem ein Bild aus vielen Graustufen (MNG) der Oberfläche einer eine Adresseninformation (ADR) umfassenden aktuellen Sendung gebildet wird, das Bild aus vielen Graustufen in ein erstes Binärbild (NB1) umgewandelt und das Binärbild an eine OCR-Einheit zwecks einer ersten automatischen Auswertung der Adresseninformation (OCR1) gesendet wird, **dadurch gekennzeichnet, dass** das erste Binärbild mit Hilfe eines mehrwertigen Digitalisierungsalgorithmus umgewandelt wird, dass aus dem Bild aus vielen Graustufen und dem Binärbild und dem Ergebnis der automatischen Auswertung Daten, die eine Signatur (SGN1, SGN2) für die aktuelle Sendung bilden, die repräsentativ für eine Kategorie von Aufzeichnungen einer Adresseninformation ist, in einem Klassifizierer (CLA) entnommen werden, der dazu eingerichtet ist, aus mehreren möglichen unterschiedlichen Digitalisierungsalgorithmen, die jeweils spezifisch auf eine Kategorie von Aufzeichnungen einer Adresseninformation angepasst sind, denjenigen zu identifizieren, der für die aktuelle Sendung am besten angepasst ist, und dass das neue Bild aus vielen Graustufen erneut in ein zweites Binärbild (NB2) umgewandelt wird, indem der von dem Klassifizierer identifizierte Digitalisierungsalgorithmus verwendet wird, indem der Kategorie, die die besagte Signatur repräsentiert, Rechnung getragen wird, dass das zweite Binärbild an eine OCR-Einheit zwecks einer zweiten automatischen Auswertung (OCR2) gesendet wird und dass die Ergebnisse der ersten automatischen Auswertung (OCR1) und der zweiten automatischen Auswertung (OCR2) zwecks Erhalts der Adresseninformation (ADR) für die Postsendung kombiniert werden.

2. Verfahren gemäß Anspruch 1, in dem die die Signatur (SGN1, SGN2) bildenden Daten statistische Daten über das Bild aus vielen Graustufen, statistische Daten über das erste Binärbild, statistische Daten über die Wort- und Zeichenerkennung, die durch die erste automatische Auswertung (OCR1) geliefert werden, umfassen.

3. Verfahren gemäß Anspruch 1 oder 2, in dem die die Signatur (SGN1, SGN2) bildenden Daten erste indikative statistische Daten des Kontrastniveaus der Aufzeichnung der Adresseninformation im Bild aus vielen Graustufen, zweite indikative statistische Daten zur Qualität der Typographie der Aufzeichnung der Adresseninformation im ersten Binärbild, dritte indikative Daten vom Typ der Aufzeichnung der Adresseninformation (handgeschriebene Aufzeichnung oder Aufzeichnung durch Aufdruck von einer Maschine stammend), vierte statistische Daten über die Qualität der Wort- und Zeichenerkennung umfassen, die durch die erste automatische Auswertung (OCR1) geliefert werden.

4. Verfahren gemäß einem der vorgehenden Ansprüche, in dem der Klassifizierer (CLA) aus einem neuronalen Netzwerk mit überwachtem Lernprozess besteht.
